# EUROPÄISCHE PATENTSCHRIFT

(11) **EP 1 002 680 B1**
(45) Veröffentlichungstag und Bekanntmachung des Hinweises auf die Patenterteilung: **16.07.2003**
(21) Anmeldenummer: 99122716.6
(22) Anmeldetag: 16.11.1999
(51) Int. Cl.: B60J 5/04

(54) **Türrahmen für einen Personenkraftwagen**
Door frame for passenger car
Cadre de porte pour automobile

(30) Priorität: 17.11.1998 DE 19852976
(43) Veröffentlichungstag der Anmeldung: 24.05.2000
(73) Patentinhaber: BENTELER AG, D-33104 Paderborn (DE)
(72) Erfinder: Gehringhoff, Ludger, 33104 Paderborn (DE); Smatloch, Christian, Dr., 33100 Paderborn (DE); Töpker, Dieter, Dr., 33100 Paderborn (DE)
(74) Vertreter: Bockermann, Rolf, Dipl.-Ing.

(56) Entgegenhaltungen:
- DE-A- 4 035 625
- DE-A- 4 446 709
- DE-A- 19 540 187
- DE-A- 19 654 376
- US-A- 5 094 034
- US-A- 5 580 120
- PATENT ABSTRACTS OF JAPAN vol. 1998, no. 01, 30. Januar 1998 (1998-01-30) -& JP 09 240400 A (AISIN KEIKINZOKU KK;TOYOTA MOTOR CORP), 16. September 1997 (1997-09-16)
- PATENT ABSTRACTS OF JAPAN vol. 1995, no. 07, 31. August 1995 (1995-08-31) -& JP 07 101241 A (TOYOTA MOTOR CORP), 18. April 1995 (1995-04-18)

## Beschreibung

Die Erfindung betrifft einen Türrahmen für einen Personenkraftwagen, welcher einen Fensterschacht aufweist, der seitlich durch ein Türaußenblech und ein Türinnenblech begrenzt ist, wobei benachbart zur Fensteröffnung im Fensterschacht liegende sich längs erstreckende Aussteifungen vorgesehen sind.

Die Ausgestaltung des Fensterschachts eines Türrahmens für einen Personenkraftwagen erlangt insbesondere dann eine große Bedeutung, wenn die Auswirkungen von Frontal- oder Heckkollisionen als häufigste Unfälle berücksichtigt werden sollen. Darüber hinaus muss der Gestaltung des Fensterschachts auch im Hinblick auf die bei einem Seitenaufprall auftretenden Beanspruchungen Beachtung geschenkt werden.

So werden die z.B. aus einem Frontalcrash resultierenden Längskräfte über Längsträger/Schweller und über den oberen Längsträger, die A-Säule und den Fensterschacht in das Fahrzeugheck geleitet. Der Fensterschacht bildet hierbei der wichtigste Bauteil, da durch ihn die Fahrgastzelte stabilisiert werden muss.

Die Beanspruchung des Fensterschachts erfolgt im wesentlichen auf Knickung und Biegung. Ein Ausknicken des Fensterschachts darf aber in keinem Fall eintreten.

Der Fensterschacht wird zur Umgebung hin durch ein Türaußenblech und zur Fahrgastzelle hin durch ein Türinnenblech begrenzt. Um eine stabile Struktur des Fensterschachts zu erreichen, ist es bekannt, Aussteifungen aus einer Vielzahl von Einzelteilen in den Fensterschacht zu integrieren. Solche Aussteifungen setzen sich aus verformten Blechen zusammen, die in Fahrzeuglängsrichtung benachbart zu der oberhalb des Fensterschachts liegenden Fensteröffnung auf den einander gegenüberliegenden Oberflächen des Türaußenblechs und des Türinnenblechs befestigt sind. Die Befestigung erfolgt meistens durch Punktschweißung. Darüber hinaus sind noch zusätzliche Verstärkungsbleche (Knotenbleche) im Bereich der den Fensterschacht stirnseitig begrenzenden Rahmenwände vorgesehen.

Nachteilig an einer solchen Bauart ist zunächst die Vielfalt der Einzelteile. Ferner ist die Knick- und Biegesteifigkeit der Aussteifungen aufgrund ihrer offenen Gestaltung begrenzt. Auch besteht die Gefahr, dass die nachgiebigen Fügestellen zwischen den Einzelteilen der Aussteifungen bei Belastungen sich öffnen können.

Die gattungsgemäße DE 195 40 187 A1 zeigt eine Türverstärkung, welche einstückig ausgebildet und längskanalisiert ist. Die Türverstärkung besitzt einen mittleren umfangsseitig geschlossenen Schlitz, welcher von der Türscheibe durchsetzt wird. Sie bildet somit unmittelbar einen Bestandteil des Fensterschachts.

Aus der Zeitschrift AUTOMOBIL REVUE 1998, Heft 19, Seite 38 sowie aus der DE 40 35 625 A ist es bekannt, dünnwandige Rohre mittels hydraulischem Innenhochdruck umzuformen.

Die FR 2 257 449 offenbart eine mehrteilige Türverstärkung, bei welcher die Einzelteile sowohl durch Punktschweißung als auch durch Kleben miteinander und mit einem Türblech verbunden sind.

Der Erfindung liegt - ausgehend vom Stand der Technik - die Aufgabe zugrunde, einen Fensterschacht für einen Türrahmen eines Personenkraftwagens mit solchen Aussteifungen zu versehen, dass bei erhöhter Knick- und Biegesteifigkeit, einfacher Herstellung und leichter Montage eine Bauteilreduzierung mit Gewichtseinsparung erreicht wird.

Die Lösung dieser Aufgabe besteht gemäß der Erfindung in den kennzeichnenden Merkmalen des Patentanspruchs 1.

Danach befindet sich auf den einander zugewandten Oberflächen des Türaußenblechs und des Türinnenblechs jeweils nur noch ein einziges Strukturelement als Aussteifung in Form eines oval gestalteten umfangsseitig geschlossenen Rohrprofils. Diese Aussteifungen sind in ihrer Kontur an die jeweiligen Oberflächen der beiden Türbleche angepasst.

Ein Vorteil solcher rohrförmiger Aussteifungen besteht im Vergleich zu konventionellen Blechgestaltungen darin, dass höchste Knick- und Biegesteifigkeiten erzielt werden können. Nachgiebige Fügestellen, die sich bei Belastung öffnen können, existieren nicht mehr.

Von Vorteil ist es weiterhin, dass die Querschnitte der Aussteifungen sowohl den maximal zu erwartenden Belastungen als auch dem jeweils zur Verfügung stehenden Einbauraum in einem Fensterschacht optimal angepasst werden können. Dabei ist es möglich, sehr genaue und mit nur geringen Toleranzen versehene Aussteifungen zu realisieren.

Femer macht sich eine deutliche Gewichtseinsparung bemerkbar, da die Anzahl der Aussteifungen reduziert wurde und durch die ovale rohrförmige Profilierung eine höhere Steifigkeit im Vergleich zu geprägten Blechteilen erreicht wird.

Die Aussteifungen werden mit hydraulischem Innenhochdruck erzeugt. Diese Fertigungsmethode erweist sich insbesondere bei komplizierten sich über die Länge verändernden Querschnitten als außerordentlich zweckmäßig.

Nach den Merkmalen des Patentanspruchs 2 können die Aussteifungen mit Längssicken versehen sein, die bevorzugt in den dem Innern des Fensterschachts zugewandten Oberflächenbereichen vorgesehen sind. Insbesondere handelt es sich hierbei um im Querschnitt gerundete Längssicken. Auf diese Weise kann den jeweiligen Anforderungen noch gezielter Rechnung getragen werden.

Eine weitere vorteilhafte Ausgestaltung des erfindungsgemäßen Grundgedankens wird in den Merkmalen des Patentanspruchs 3 erblickt. Danach sind die Endabschnitte der Aussteifungen konisch aufgeweitet. Hiermit können große Profilaufweitungen an den Enden der Aussteifungen erzielt werden. Dies ermöglicht eine außerordentlich steife Anbindung an die den Fensterschacht begrenzenden Stimwände des Türrahmens. Zusätzliche Knotenbleche, wie bei den herkömmlichen Aussteifungen, sind entbehrlich.

Die konturenmäßige Anpassung der Aussteifungen an die einander zugewandten Oberflächen des Türaußenblechs und Türinnenblechs erlaubt es nach Patentanspruch 4, die Aussteifungen durch Lochschweißung oder Laserschweißung mit dem Türaußenblech sowie dem Türinnenblech und ggf. auch mit den den Fensterschacht stirnseitig begrenzenden Wänden des Türrahmens zu verbinden.

Statt einer Schweißung kann gemäß den Merkmalen des Patentanspruchs 5 auch ein Fügeverfahren mittels Kleben angewandt werden.

Selbstverständlich ist eine kombinierte Fügeweise ebenfalls vorstellbar.

Entsprechend den Merkmalen des Patentanspruchs 6 können die Aussteifungen aus einem hochfesten Kohlenstoffstahl bestehen.

Eine besonders vorteilhafte Ausführungsform ist in den Merkmalen des Patentanspruchs 7 gekennzeichnet. Ein derartiger Stahl erlaubt eine gewichtsoptimierte Energieumwandlung bei einer Streckgrenze > 1100 N/m², einer Zugfestigkeit > 1400 N/mm² und einer Dehnung A5 > 8 %.

Nach Patentanspruch 8 sind darüber hinaus andere umformbare Werkstoffe einsetzbar, wie z.B. Aluminiumlegierungen.

Die Erfindung ist nachfolgend anhand von in den Zeichnungen dargestellten Ausführungsbeispielen näher erläutert. Es zeigen:
- Figur 1: im schematischen vertikalen Querschnitt einen Fensterschacht eines Türrahmens für einen Personenkraftwagen und
- Figur 2: in vergrößerter perspektivischer Darstellung eine weitere Ausführungsform einer Aussteifung für den Fensterschacht der Figur 1.

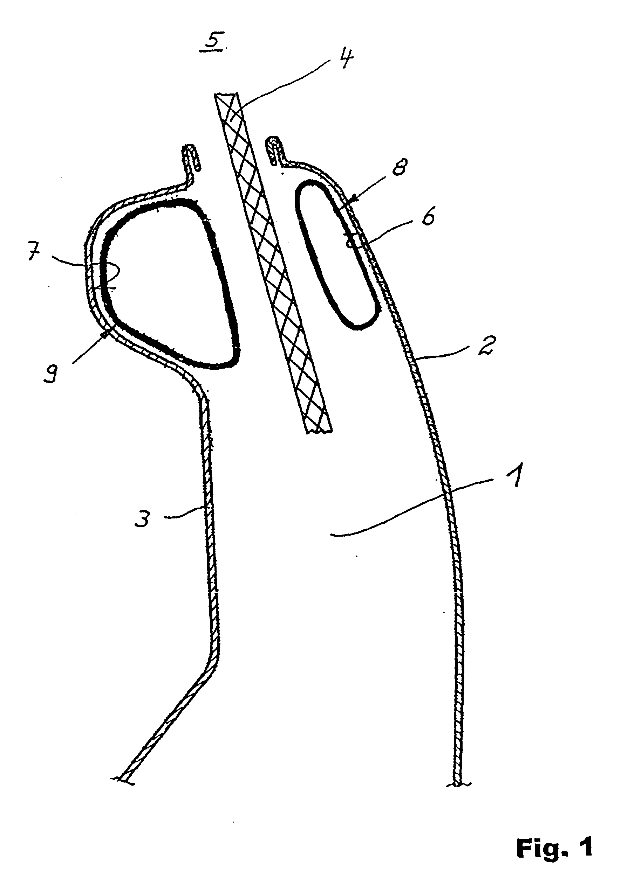

Mit 1 ist in der Figur 1 der Fensterschacht eines ansonsten nicht näher dargestellten Türrahmens für einen Personenkraftwagen bezeichnet. Der Fensterschacht 1 wird seitlich durch ein gekrümmtes Türaußenblech 2 sowie durch ein ebenfalls gekrümmtes Türinnenblech 3 begrenzt. Der Fensterschacht 1 dient der Aufnahme einer Fensterscheibe 4.

Benachbart zu der oberhalb des Fensterschachts 1 liegenden Fensteröffnung 5 sind an die einander zugewandten Oberflächen 6, 7 des Türaußenblechs 2 und des Türinnenblechs 3 angepasste rohrförmige Aussteifungen 8, 9 vorgesehen, deren ovale Querschnitte durch hydraulische Innenhochdruckumformung von umfangsseitig geschlossenen Rohrprofilen gebildet sind.

Da die Aussteifungen 8, 9 den Oberflächen 6, 7 des Türaußenblechs 2 und des Türinnenblechs 3 angepasst sind, können sie durch Kleben an den Oberflächen 6, 7 befestigt werden. Des Weiteren ist zu erkennen, dass ihre Querschnitte auf den jeweils zur Verfügung stehenden Bauraum in Abhängigkeit von den zu erwartenden maximalen Belastungen optimal abgestimmt werden können.

Die Aussteifungen 8, 9 können ferner in nicht näher veranschaulichter Weise über ihre Stirnseiten an den ebenfalls nicht näher dargestellten Stirnwänden des Fensterschachts 1 festgelegt sein.

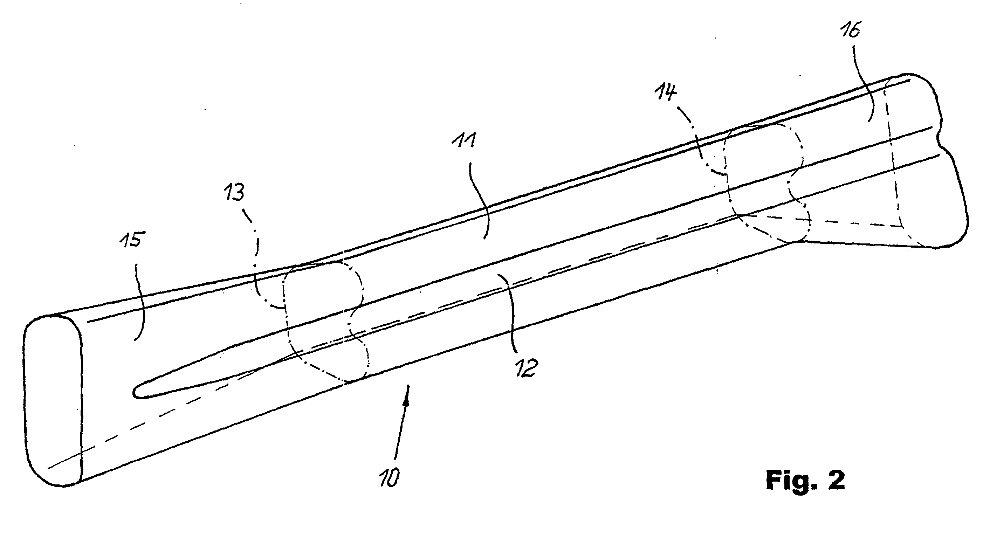

In der Figur 2 ist eine Ausführungsform einer Aussteifung 10 dargestellt, bei welcher in eine Breitseite 11 eine im Querschnitt gerundete Längssicke 12 eingearbeitet ist. Dadurch ergeben sich die in strichpunktierter Linienführung veranschaulichten Querschnitte 13, 14.

Ferner ist zu erkennen, dass die Endabschnitte 15, 16 der Aussteifung 10 konisch aufgeweitet sind. Auch die nicht näher veranschaulichten Endabschnitte der Aussteifungen 8, 9 können derartig aufgeweitet sein, um eine steife Anbindung an die Stirnwände des Fensterschachts 1 zu gewährleisten.

## Patentansprüche

1. Türrahmen für einen Personenkraftwagen, welcher einen Fensterschacht (1) aufweist, der seitlich durch ein Türaußenblech (2) und ein Türlnnenblech (3) begrenzt ist, wobei das Türaußenblech (2) und das Türinnenblech (3) benachbart zur Fensteröffnung (5) mit im Fensterschacht (1) liegenden, sich längs erstreckenden Aussteifungen (8, 9, 10) versehen sind, **dadurch gekennzeichnet, dass** an die innere Oberfläche (6) des Türaußenblechs (2) einerseits und an die innere Oberfläche (7) des Türinnenblechs (3) andererseits jeweils eine einzige Aussteifung (8, 9, 10) in Form eines im Querschnitt oval gestalteten, umfangsseitig geschlossenen, mittels hydraulischem Innenhochdruck umgeformten Rohrprofils angepasst ist.

2. Türrahmen nach Anspruch 1, bei welchem die Aussteifungen (10) mit Längssicken (12) versehen sind.

3. Türrahmen nach Anspruch 1 oder 2, bei welchem die Endabschnitte (15, 16) der Aussteifungen (8, 9, 10) konisch aufgeweitet sind.

4. Türrahmen nach einem der Ansprüche 1 bis 3, bei welchem die Aussteifungen (8, 9, 10) durch Loch- oder Laserschweißung mit dem Türaußenblech (2), dem Türinnenblech (3) und jeder den den Fensterschacht (1) stimseitig begrenzenden Wänden des Türrahmens verbunden sind.

5. Türrahmen nach einem der Ansprüche 1 bis 3, bei welchem die Aussteifungen (8, 9, 10) durch Kleben mit dem Türaußenblech (2), dem Türinnenblech (3) und/oder den den Fensterschacht (1) stirnseitig begrenzenden Wänden des Türrahmens verbunden sind.

6. Türrahmen nach einem der Ansprüche 1 bis 5, bei welchem die Aussteifungen (8, 9, 10) aus einem hochfesten kohlenstoffstahl gebildet sind.

7. Türrahmen nach einem der Ansprüche 1 bis 5, bei welchem die Aussteifungen (8, 9, 10) aus einem Stahl folgender Zusammensetzung gebildet sind:
| | |
|---|---|
| Kohlenstoff | 0,23 - 0,27 Gewichtsprozent |
| Silizium | 0,15 - 0,30 Gewichtsprozent |
| Mangan | 1,10 - 1,40 Gewichtsprozent |
| Phosphor | max. 0,25 Gewichtsprozent |
| Schwefel | max. 0,01 Gewichtsprozent |
| Chrom | 0,10 - 0,35 Gewichtsprozent |
| Molybdän | 0,10 - 0,35 Gewichtsprozent |
| Kupfer | max. 0,10 Gewichtsprozent |
| Aluminium | 0,03 - 0,05 Gewichtsprozent |
| Titan | 0,03 -0,05 Gewichtsprozent |
| Brom | 0,002 - 0,003 Gewichtsprozent |
| Rest Eisen einschließlich erschmelzungsbedingter Verunreinigungen. | |

8. Türrahmen nach einem der Ansprüche 1 bis 5, bei welchem die Aussteifungen (8, 9, 10) aus Aluminiumlegierungen gebildet sind.

## Claims

1. A door frame for a private car, comprising a window shaft (1) defined laterally by a door outer plate (2) and a door inner plate (3), the outer plate (2) and the inner plate (3) adjacent the window opening (5) being provided with longitudinally extending reinforcements (8, 9, 10) which are situated in the window shaft (1), **characterised in that** a single reinforcement (8, 9, 10) is adapted respectively to the inner surface (6) of the door outer plate (2), on the one hand, and to the inner surface (7) of the door inner plate (3), on the other hand, the said single reinforcement (8, 9, 10) being in the form of a peripherally closed tube profile of oval cross-section shaped by hydraulic internal high pressure.

2. A door frame according to claim 1, wherein the reinforcements (10) are provided with longitudinal grooves (12).

3. A door frame according to claim 1 or 2, wherein the end portions (15, 16) of the reinforcements (8, 9, 10) are conically widened.

4. A door frame according to any one of claims 1 to 3, wherein the reinforcements (8, 9, 10) are connected by slot or laser welding to the door outer plate (2), the door inner plate (3) and each of the door frame walls defining the ends of the window shaft (1).

5. A door frame according to any one of claims 1 to 3, wherein the reinforcements (8, 9, 10) are connected by sticking to the door outer plate (2), the door inner plate (3) and/or the door frame walls defining the ends of the window shaft (1).

6. A door frame according to any one of claims 1 to 5, wherein the reinforcements (8, 9, 10) are formed from a high-strength carbon steel.

7. A door frame according to any one of claims 1 to 5, wherein the reinforcements (8, 9, 10) are formed from a steel of the following composition:
| | |
|---|---|
| Carbon | 0.23 - 0.27% by weight |
| Silicon | 0.15 - 0.30% by weight |
| Manganese | 1.10 - 1.40% by weight |
| Phosphorus | max. 0.25% by weight |
| Sulphur | max. 0.01% by weight |
| Chromium | 0.10 - 0.35% by weight |
| Molybdenum | 0.10 - 0.35% by weight |
| Copper | max. 0.10% by weight |
| Aluminium | 0.03 - 0.05% by weight |
| Titanium | 0.03 - 0.05% by weight |
| Bromine | 0.002-0.003% by weight |
| Remainder iron including impurities due to smelting. | |

8. A door frame according to any one of claims 1 to 5, wherein the reinforcements (8, 9, 10) are formed from aluminium alloys.

## Revendications

1. Cadre de portière pour un véhicule automobile de tourisme qui comporte un compartiment de vitre (1) qui est délimité latéralement par une tôlerie extérieure de portière (2) et une tôlerie intérieure de portière (3), dans lequela tôlerie extérieure de portière (2) et la tôlerie intérieure (3) limitrophes de l'ouverture de vitre (5) sont munies de renforts (8,9,10) situés dans le compartiment de vitre et s'étendant longitudinalement, **caractérisé en ce que**, sur la surface intérieure (6) de la tôlerie extérieure de portière (2) d'une part, et sur la surface intérieure (7) de la tôlerie intérieure de portière (3) d'autre part, est respectivement adapté un renfort unique (8,9,10) sous la forme d'un profilé tubulaire de section transversale ovale, fermé sur sa périphérie, déformé au moyen de haute pression hydraulique interne.

2. Cadre de portière selon la revendication 1, dans lequel les renforts (10) sont munis de moulures longitudinales (12).

3. Cadre de portière selon la revendication 1 ou 2, dans lequel les portions d'extrémité (15,16) des renforts (8,9,10) sont élargies de façon conique.

4. Cadre de portière selon l'une des revendications 1 à 3, dans lequel les renforts (8,9,10) sont raccordés par soudure au laser ou soudure en bouchon à la tôlerie extérieure de portière (2), à la tôlerie intérieure de portière (3) et à chacune des parois du cadre de portière délimitant frontalement le compartiment de vitre (1).

5. Cadre de portière selon l'une des revendications 1 à 3, dans lequel les renforts (8,9,10) sont raccordés par collage à la tôlerie extérieure de portière (2), à la tôlerie intérieure de portière (3) et/ou aux parois de portière délimitant frontalement le compartiment de vitre (1).

6. Cadre de portière selon l'une des revendications 1 à 5, dans lequel les renforts (8,9,10) sont formés à partir d'un acier au carbone à résistance élevée.

7. Cadre de portière selon l'une des revendications 1 à 5, dans lequel les renforts (8,9,10) sont formés à partir d'un acier ayant la composition suivante :
| | |
|---|---|
| carbone | 0,23-0,27 % en poids |
| silicium | 0,15-0,30 % en poids |
| manganèse | 1,10-1,40 % en poids |
| phosphore | max. 0,25 % en poids |
| soufre max. | 0,01 % en poids |
| chrome | 0,10-0,35 % en poids |
| molybdène | 0,10-0,35 % en poids |
| cuivre | max. 0,10 % en poids |
| aluminium | 0,03-0,05 % en poids |
| titane | 0,03-0,05 % en poids |
| brome | 0,002-0,003 % en poids |
| reste : fer y compris des impuretés résultant de la première fusion. | |

8. Cadre de portière selon l'une des revendications 1 à 5, dans lequel les renforts (8,9,10) sont réalisés à partir d'alliages d'aluminium.
